(19) Europäisches Patentamt
European Patent Office
Office européen des brevets

(11) Veröffentlichungsnummer: **0 350 533 B1**

(12) **EUROPÄISCHE PATENTSCHRIFT**

(45) Veröffentlichungstag der Patentschrift: **25.03.92**

(51) Int. Cl.⁵: **F16N 39/00,** F01M 5/00, F16N 27/00

(21) Anmeldenummer: **88118671.2**

(22) Anmeldetag: **10.11.88**

(54) **Gerät zur Schmierstoffdosierung.**

(30) Priorität: **11.07.88 DE 3823429**

(43) Veröffentlichungstag der Anmeldung:
**17.01.90 Patentblatt 90/03**

(45) Bekanntmachung des Hinweises auf die
Patenterteilung:
**25.03.92 Patentblatt 92/13**

(84) Benannte Vertragsstaaten:
**AT BE CH DE ES FR GB GR IT LI LU NL SE**

(56) Entgegenhaltungen:
**DE-A- 2 018 776
DE-A- 3 339 016
DE-A- 3 637 851
DE-B- 1 033 469**

(73) Patentinhaber: **HYDAC TECHNOLOGY GMBH
Industriestrasse
W-6603 Sulzbach/Saar(DE)**

(72) Erfinder: **Scheuber, Harald R., Dipl.-Ing.
Birkenallee 5A
W-6823 Neulussheim(DE)**
Erfinder: **Walker, Robert M.
Im Birkenfeld 6
W-6603 Sudweiler(DE)**
Erfinder: **Hornung, Dieter, Dr.
Kantstrasse 11
W-6797 Waldmohr(DE)**
Erfinder: **Dyroff, Walter, Ing.(grad.)
Schieferweg 15
W-4837 Verl 1(DE)**

(74) Vertreter: **Patentanwälte Phys. Bartels
Dipl.-Ing. Fink Dr.-Ing. Held
Lange Strasse 51
W-7000 Stuttgart 1(DE)**

EP 0 350 533 B1

## Beschreibung

Die Erfindung betrifft ein Gerät zur versorgungsdruckund viskoseunabhängigen Schmierstoffdosierung, das die Merkmale des Oberbegriffes des Patentanspruches 1 aufweist.

Es gibt Maschinen oder dgl., wie z. B. Papiermaschinen, bei denen den Schmierstellen während des Anfahrbetriebes eine andere, versorgungsdruck- und viskoseunabhängige Schmiermittelmenge als während des Arbeitsbetriebes zugeführt werden muß. Den Zwei-Wege-Stromreglern, welche die Schmiermittelmenge versorgungsdruckunabhängig halten, sind deshalb bei einem bekannten Gerät der eingangs genannten Art (DE-A-3 637 851) zwei entweder in Reihe oder parallel geschaltete Festdrosseln unterschiedlicher Öffnungsweite vorgeschaltet, die beide fest im Kolben des Stromreglers angeordnet sind. Über ein hydraulisch ansteuerbares Umsteuerventil läßt sich bei einer Reihenschaltung wahlweise eine Umgehungsleitung der Drossel kleinerer Öffnungsweite absperren und freigeben. Bei einer Parallelschaltung wird wahlweise die Zuleitung zur einen oder anderen Drossel abgesperrt.

Der das Umsteuerventil enthaltende Vorsteuerteil erhöht den Platzbedarf und Aufwand. Ferner sind ein zusätzliches Rohrleitungssystem für die Umsteuerventile sowie eine Pumpe für die Steuerhydraulik erforderlich. Weiterhin sind bei diesem bekannten Gerät mehrere Drosselpaare auf einer gemeinsamen Grundplatte angeordnet und an ein und dasselbe Umsteuerventil angeschlossen, wodurch sich die Schmiermittelmenge nur gruppenweise verändern läßt.

Der Erfindung liegt die Aufgabe zugrunde, ein Gerät der eingangs genannten Art zu verbessern. Diese Aufgabe löst ein Gerät mit den Merkmalen des Anspruches 1.

Das erfindungsgemäße Gerät hat, da es keinen Vorsteuerteil benötigt, einen geringen Platzbedarf und kann deshalb in das Gehäuse des Zwei-Wege-Stromreglers integriert oder, und zwar auch nachträglich, problemlos mit den bekannten Zwei-Wege-Stromreglern zu einer Baueinheit vereinigt werden. Dabei ist von besonderem Vorteil, daß in den meisten Fällen kein zusätzliches Rohrleitungssystem erforderlich ist, sondern nur eine elektrische Leitung zu einem Elektromagneten der Verstelleinrichtung geführt zu werden braucht, was eine Nachrüstung erheblich vereinfacht. Nur dann, wenn große Volumenströme gesteuert werden müssen, ist in der Regel ein hydraulischer oder pneumatischer Antrieb in Betracht zu ziehen. Selbstverständlich ist es auch möglich, den Antrieb von Hand, mit Hilfe eines Motors oder mittels eines geregelten Proportionalmagneten vorzunehmen, wobei zusätzlich ein Wegmeßsystem vorgesehen sein kann. Letzteres ist vor allem bei Verwendung einer Drossel mit veränderbarem freiem Querschnitt vorteilhaft. Schließlich ist es weder aus Kostengründen noch aus Platzgründen erforderlich, eine Gruppenansteuerung vorzusehen, was die Einsatzmöglichkeit des erfindungsgemäßen Gerätes ebenfalls verbessert.

Im einzelnen kann das erfindungsgemäße Gerät unterschiedlich ausgebildet sein. Bei einer Ausbildung gemäß Anspruch 2 ist die die kleinere Öffnungsweite aufweisende zweite Drossel zwischen einer wirksamen Stellung, in welcher sie sich an die Einlaßöffnung der die größere Öffnungsweite aufweisenden ersten Drossel anschließt und dadurch diese unwirksam macht, und einer zweiten Stellung bewegbar, in welcher sie die Einlaßöffnung der ersten Drossel freigibt, so daß nur letztere wirksam ist. Bei einer Ausgestaltung gemäß Anspruch 3 ist ein düsennadalartiger Drosselkörper mittels der Verstelleinrichtung zwischen einer wirksamen Stellung, in welcher er unter Bildung eines Spaltes in die Einlaßöffnung der die größere Öffnungsweite aufweisenden ersten Drossel eingreift und einer unwirksamen Stellung bewegbar, in der er sich in einem die Einlaßöffnung der ersten Drossel freigebenden Abstand von dieser befindet. In der letzt genannten Stellung ist deshalb nur die erste Drossel wirksam, während in der erst genannten Stellung die Drosselwirkung durch den Spalt bestimmt wird, den der Drosselkörper mit der Einlaßöffnung der zweiten Drossel bildet.

Man kann aber auch gemäß Anspruch 4 den die erste Drossel bildenden Drosselkörper mit einem zweiten Drosselkanal versehen, über den der Zwei-Wege-Stromregler ständig mit dem Raum in Verbindung steht, in dem sich die Einlaßöffnung der ersten Drossel befindet, und mittels eines mit Hilfe der Verstelleinrichtung bewegbaren Schließkörpers den einen Drosselkanal verschließen oder freigeben. Im letzt genannten Falle sind dann gleichzeitig beide Drosselkanäle, im erst genannten Falle nur einer der beiden Drosselkanäle wirksam.

Um den Aufwand für die Verstelleinrichtung und die zu ihr führenden Leitungen möglichst gering zu halten, weist bei einer bevorzugten Ausführungsform die Verstelleinrichtung gemäß Anspruch 6 ein nur in der einen Richtung eine Betätigungskraft erzeugendes Antriebselement auf. Die in der entgegengeetzten Richtung wirksame Betätigungskraft wird dabei von wenigstens einer Feder erzeugt.

Aus Kostengründen ist es vorteilhaft, jedes mittels der Verstelleinrichtung bewegbare Bauteil und vorzugsweise auch das Antriebselement der Verstelleinrichtung gleichachsig zu der die größere Öffnungsweite aufweisenden Drossel anzuordnen.

Wird die Drossel kleinerer Öffnungsweite durch einen mittels der Verstelleinrichtung verschiebbaren Körper gebildet, dann setzt man diese Drossel vorteilhafterweise in einen kolbenartigen Träger gemäß Anspruch 10. Ist dabei die Ausbildung der ersten Drossel und des kolbenartigen Trägers gemäß Anspruch 12 getroffen, dann sind bei wirksamer zweiter Drossel keine zusätzlichen Kanäle erforderlich, um das Schmiermittel zur Eintrittsöffnung der zweiten Drossel zu führen. Dies vereinfacht nicht nur die konstruktive Gestaltung des Gerätes, sondern reduziert auch dessen Raumbedarf.

Zweckmäßiger Weise sind die Körper der beiden Drosseln auswechselbar in ihre Träger eingesetzt, um in einfacher Weise die erforderliche Drosselwirkung an die Erfordernisse anpassen zu können.

Im folgenden ist die Erfindung anhand von drei in der Zeichnung dargestellten Ausführungsbeispielen im einzelnen erläutert. Es zeigen:

Fig. 1   einen unvollständig dargestellten Längsschnitt des ersten Ausführungsbeispiels im Zustand der Wirksamkeit der Drossel mit der kleineren Öffnungsweite,

Fig. 2   einen Schnitt entsprechend Fig. 1 des ersten Ausführungsbeispiels im Zustand der Unwirksamkeit der Drosseln mit der kleineren Öffnungsweite,

Fig. 3   einen unvollständig dargestellten Schnitt entsprechend Fig. 1 des zweiten Ausführungsbeispiels.

Fig. 4   einen unvollständig dargestellten Längsschnitt eines dritten Ausführungsbeispiels.

Ein Gerät zur versorgungsdruckunabhängigen Schmiermitteldosierung weist einen in bekannter Weise ausgebildeten Zwei-Wege-Stromregler auf, dem eine erste Drossel 1 vorgeschaltet ist. Diese erste Drossel 1 weist einen zylindrischen Körper mit einer eine Verengung aufweisenden zentralen Durchgangsbohrung 2, einen Ringbund 1′ sowie im Anschluß an diesen je ein Außengewinde auf. Die Eintrittsöffnung der ersten Drossel 1 verjüngt sich konisch zu der Verengung hin. Diese erste Drossel 1 ist von der dem Zwei-Wege-Stromregler abgekehrten Seite her in eine zentrale Gewindebohrung einer Trennwand 3 eingeschraubt, die in einer Radialebene liegend im Inneren eines Hohlzylinders 4 angeordnet ist. Der Innendurchmesser des Hohlzylinders 4 ist wesentlich größer als, im Ausführungsbeispiel etwa doppelt so groß wie, der Außendurchmesser der ersten Drossel 1. Der an beiden Enden offene Hohlzylinder 4, dessen dem Zwei-Wege-Stromregler abgekehrter Endabschnitt einen vergrößerten Außendurchmesser hat, ist unter Zwischenlage einer Ringdichtung 5 in ein zylindrisches Gehäuse 6 eingesetzt, das seinerseits unter Zwischenlage einer Ringdichtung 7 in einer Bohrung einer Grundplatte 8 angeordnet ist. Das Gehäuse 6 ist ebenso wie der Hohlzylinder 4 an beiden Enden offen.

Die Trennwand 3 unterteilt den Innenraum des Hohlzylinders 4 in einen mit der Einlaßöffnung des Zwei-Wege-Stromreglers in Verbindung stehenden Raum 9 und einen Raum 10, von dem aus die erste Drossel 1 in die sie aufnehmende Gewindebohrung eingeschraubt ist.

Unmittelbar neben der Trennwand 3 mündet in den Raum 10 ein auch das Gehäuse 6 durchdringender Schmiermittelzuführungskanal 11, der zu einem Anschluß für die Versorgungsleitung führt.

Im Ausführungsbeispiel ist diametral zum Schmiermittelzuführungskanal 11 ein Verbindungskanal 14 vorgesehen, um weitere Geräte an die gemeinsame Versorgungsleitung anschließen zu können.

Vom offenen Ende des Raumes 10 her greift in diesen ein kolbenartiger Träger 12 für eine zweite Drossel 13 längsverschiebbar ein. Geführt ist dieser Träger 12 im Hohlzylinder 4 nur im Bereich von dessen im Außendurchmesser vergrößertem Abschnitt durch radial verlaufende Führungsrippen 15. Im übrigan ist zwischen der Außenmantelfläche des Trägers 12 und der Innenmantelfläche des Hohlzylinders 4 ein Ringraum 16 vorhanden, dessen Querschnittsfläche größer ist als der größte freie Drosselquerschnitt, im vorliegenden Fall also größer als der freie Querschnitt der ersten Drossel 1. Zu dem der Trennwand 3 abgekehrten Ende das Trägers 12 ist gleichachsig ein Stößel 17 angeordnet, der vom Anker eines nicht dargestellten Elektromagneten bei dessen Erregung gegen die Trennwand 3 hin bewegt wird und dabei den Träger 12 entgegen der Kraft von Druckfedern 13 mitnimmt. Im Ausführungsbeispiel greift der Stößel 17 in eine Sacklochbohrung des Trägers 12 ein. Die Druckfedern 18 sind zwischen den Führungsrippen 15 angeordnet und einerseits an einer Ringschulter des Hohlzylinders 4, andererseits an einer durch den flanschartig ausgebildeten Endabschnitt des Trägers 12 gebildeten Ringschulter abgestützt.

Von der der Trennwand 3 zugekehrten Stirnfläche her dringt in den Träger 12 eine zentrale Gewindebohrung 19 ein, in welche die zweite Drossel 13 eingeschraubt ist. An diese Gewindebohrung 19 schließt sich gleichachsig eine glatte Sacklochbohrung 20 an, welche von einer den Träger 12 in radialer Richtung vollständig durchdringenden Querbohrung 21 gekreuzt wird.

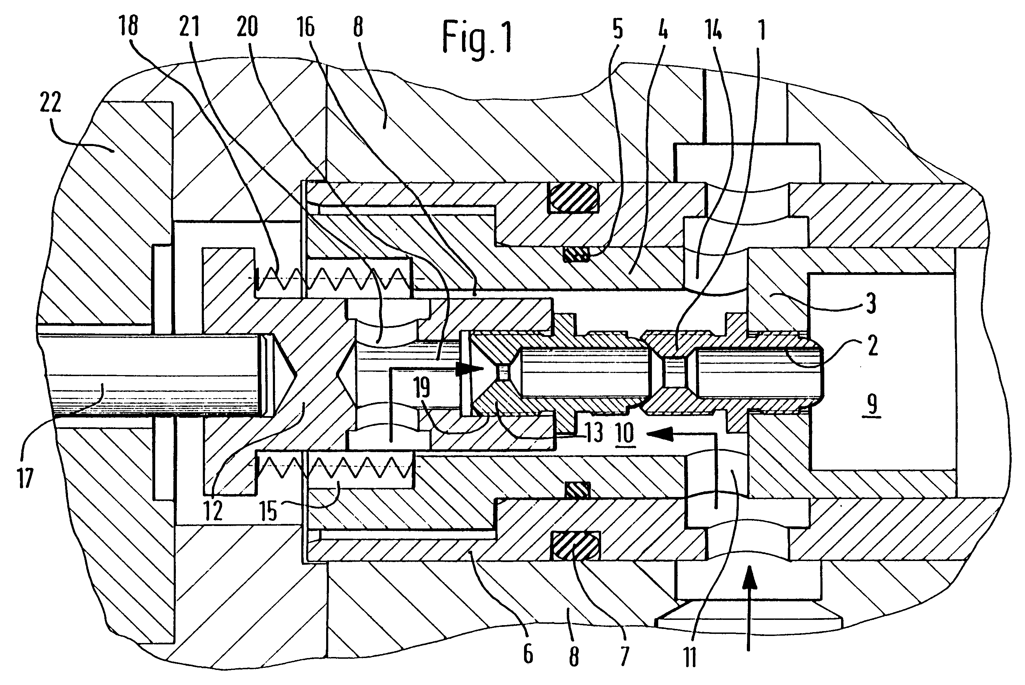

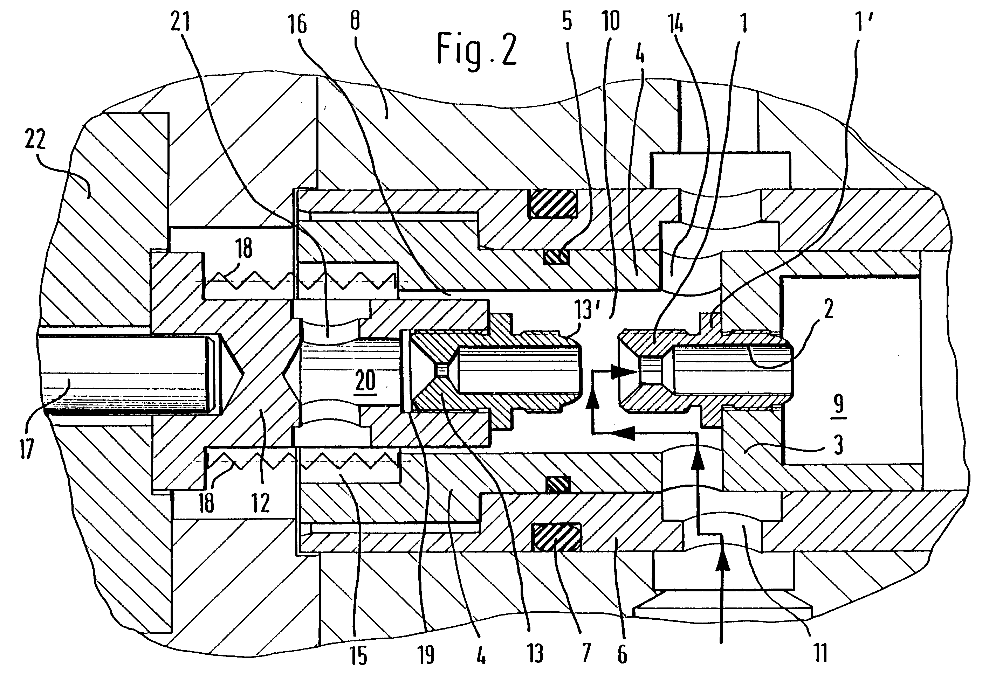

Die zweite Drossel 13 unterscheidet sich von der ersten Drossel 1 nur durch eine geringere Öffnungsweite der Verengung ihrer zentralen Durchgangsbohrung. Sie ist, wie die Fig. 1 und 2 zeigen, mit demjenigen Abschnitt bis zur Anlage an ihrem Ringbund in die Gewindebohrung 19 eingeschraubt, welcher die Verengung enthält. Der über das Ende des Trägers 12 überstehende Endabschnitt 13' verjüngt sich ballig zum freien Ende hin, wodurch ein gut dichtender Sitz gebildet wird, wenn, wie Fig. 1 zeigt, dieser Endabschnitt 13' in die konische Eintrittsöffnung der ersten Drossel 1 eingreift und gegen die erste Drossel 1 gedrückt wird

Wenn die Schmierstelle mit der kleineren der beiden einstellbaren Schmiermitteldosierungen versorgt werden muß, wird der nicht dargestellte Elektromagnet über die zu ihm führende elektrische Leitung erregt. Der Stößel 17 drückt dabei entgegen der Kraft der Druckfedern 18 den Endabschnitt 13' der zweiten Drossel 13 in die konische Eintrittsöffnung der ersten Drossel 1. Das durch den Verbindungskanal 14 in den Raum 10 eintretende Schmiermittel strömt dann durch den Ringraum 16 hindurch in die Querbohrung 21. Von dort aus gelangt es durch die Sacklochbohrung 20 hindurch in den zentralen Längskanal der zweiten Drossel 13. Von hier aus strömt es durch den zentralen Längskanal 2 der ersten Drossel 1 und dann durch den Raum 9 hindurch zum Zwei-Wege-Stromregler, welcher den Schmiermittelstrom unabhängig vom Versorgungsdruck konstant hält.

Sobald die höhere Dosierung benötigt wird, wird der Elektromagnet entregt. Die vorgespannten Druckfedern 18 bewegen nun den Träger 12 und mit ihm die zweite Drossel 13 von der Trennwand 3 weg bis zur Anlage des Trägers 12 an einem Deckel 22. Nunmehr kann, wie durch die Pfeile in Fig. 2 angedeutet, das Schmiermittel vom Raum 10 aus direkt in die Eintrittsöffnung der ersten Drossel 1 eintreten, weshalb nur noch die erste Drossel 1 wirksam ist.

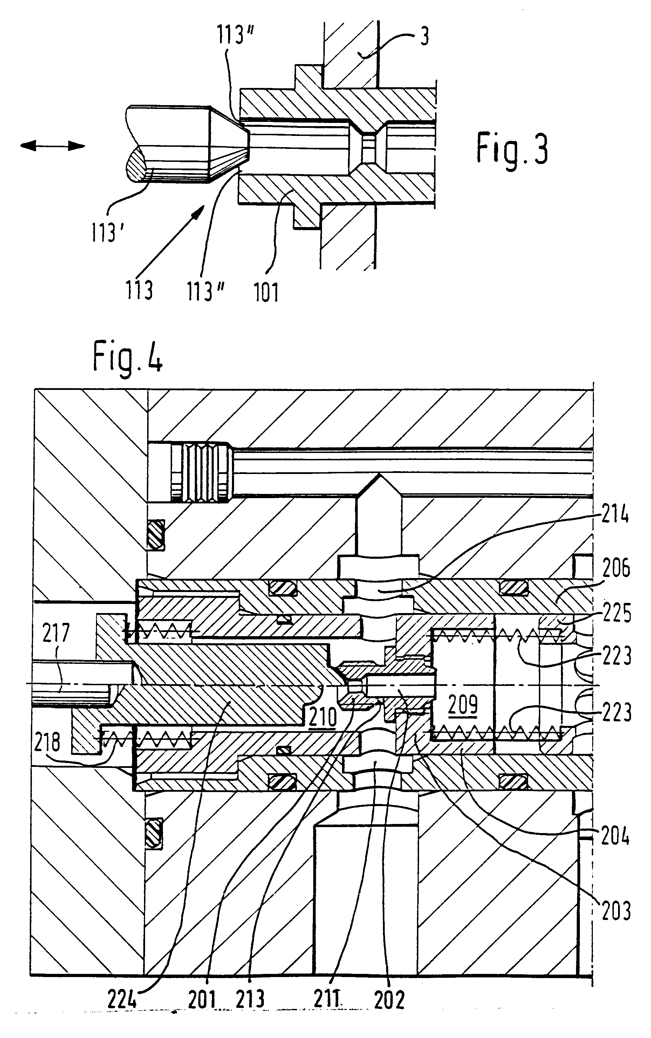

Wie Fig. 3 zeigt, kann die zweite Drossel 113 auch mit Hilfe einer gleichachsig zur ersten Drossel 101, welche wie die erste Drossel 1 des ersten Ausführungsbeispiels ausgebildet ist, angeordnete Düsennadel 113' realisiert werden, welche in ihrer Längsrichtung mittels des Verstellantriebs verschiebbar ist. Die Düsennadel 113' ist deshalb mit ihrem der ersten Drossel 101 abgekehrten Ende lösbar mit dem nur in den Fig. 1 und 2 dargestellten Träger 12 verbunden. Das sich konisch verjüngende Ende der Düsennadel 113' greift im wirksamen Zustand der zweiten Drossel 113 in die Eintrittsöffnung der ersten Drossel 101 ein und bildet einen als Drosselstelle dienenden Ringspalt 113". In der unwirksamen Stellung der zweiten Drossel 113 ist die Düsennadel 113' so weit zurückgezogen, daß sie den Eintritt des Schmiermittels in die Eintrittsöffnung der ersten Drossel 101 nicht behindert.

Auch bei dem in Fig 4 dargestellten Ausführungsbeispiel ist wie bei den vorstehend beschriebenen Ausführungsbeispielen in ein zylindrisches Gehäuse 206, in dem längsverschiebbar der Reglerkörper 225 des Zwei-Wege-Stromreglers angeordnet ist, ein Hohlzylinder 204 eingesetzt, der im Abstand von dem dem Reglerkörper 225 zugewandten Ende eine in einer Radialebene liegende Trennwand 203 aufweist. Diese Trennwand 203, an der über Federn 223 der Reglerkörper abgestützt ist, ist mit einer zentralen Gewindedurchgangsbohrung versehen, in welche ein Drosselkörper 201 eingeschraubt ist. Wie Fig. 4 zeigt, weist dieser Drosselkörper 201 nicht nur eine die erste Drossel bildende zentrale Durchgangsbohrung 202 auf, sondern auch eine die zweite Drossel bildende radiale Bohrung 213. Letztere mündet in die zentrale Durchgangsbohrung 202 im Bereich zwischen deren die Drosselwirkung bestimmenden Engstelle und demjenigen Ende, das in den Raum 209 des Hohlzylinders 204 mündet, der zum Reglerkörper 225 hin offen ist. Über die die zweite Drossel bildende radiale Bohrung 213 steht deshalb der Raum 209 ständig mit dem Raum 210 in Verbindung, welcher durch die Trennwand 203 vom Raum 209 abgetrennt ist und in den neben der Trennwand 203 der Schmiermittelzuführungskanal 211 mündet, welcher die Zylinderwand des Hohlzylinders 204 und diejenige des Gehäuses 206 durchdringt und zu einem Anschluß für die Versorgungsleitung führt. Ein diametral zum Schmiermittelzuführungskanal 211 liegender Verbindungskanal 214 ermöglicht wie bei den zuvor beschriebenen Ausführungsbeispielen, weitere Geräte an die gemeinsame Versorgungsleitung anzuschließen.

Im Raum 210 ist gleichachsig zum Hohlzylinder 204 längsverschiebbar ein zylindrisches Schließglied 224 angeordnet, das an seiner dem Drosselkörper 201 zugewandten Stirnfläche einen zentralen, halbkugelförmigen Vorsprung aufweist, dessen Radius so gewählt ist, daß dieser Vorsprung in die konische Einlaßöffnung der die erste Drossel bildenden zentralen Bohrung 202 einzugreifen und diese zu verschließen vermag. Diese Schließstellung des Schließgliedes 224 ist in der oberen Hälfte der Fig. 4 dargestellt. Seine Freigabestellung, in welcher der Vorsprung in einem die Einlaßöffnung freigebenden Abstand vom Drosselkörper 201 steht, ist in der unteren Hälfte der Fig. 4 dargestellt. Für die Verschiebung des Schließgliedes 224 in seine Schließstellung ist das dem Drosselkörper 201 abgekehrte Ende mit einem Stößel 217 verbunden, der mittels eines Elektromagneten oder eines Arbeitszylinders gegen den Drosselkörper 201 hin verschiebbar ist. Vorgespannte Druckfedern 218, welche einerseits an einer Ringschulter des Schließgliedes 224 und andererseits an einer Schulter des Hohlzylinders 204 abgestützt sind, versuchen, das Schließglied 224 in seiner unwirksamen Stellung zu halten.

Wegen weiterer konstruktiver Einzelheiten wird auf die Erläuterung des ersten Ausführungsbeispiels Bezug genommen, da insoweit Übereinstimmung besteht.

Befindet sich das Schließglied 224 in der in Fig. 4 unten dargestellten unwirksamen Stellung, dann strömt das durch den Verbindungskanal 211 eintretende Schmiermittel sowohl durch die die zweite Drossel bildende radiale Bohrung 213 als auch durch die die erste Drossel bildende Engstelle der zentralen Bohrung 202 in den Raum 209. Die beiden Drosseln sind also parallel geschaltet, so daß die Summe ihrer Öffnungsweiten die Drosselwirkung bestimmt. In der in Fig. 4 oben dargestellten Schließstellung, bestimmt allein die radiale Bohrung 213 die Drosselwirkung. Die Drosselung des Schmiermittelstromes ist deshalb stärker.

**Patentansprüche**

1.  Gerät zur versorgungsdruck- und viskoseunabhängigen Schmiermitteldosierung mit
    a) einem Zwei-Wege-Stromregler,
    b) wenigstens zwei dem Zwei-Wege-Stromregler zugeordneten Drosseln (1, 2; 101; 201, 202) unterschiedlicher Öffnungsweite zur Steuerung der den Schmierstellen zugeführten Schmiermittelmenge,
    c) einem die Drosseln (1, 2, 13; 101, 113; 201, 202, 213) enthaltenden Gehäuse (4, 6; 204, 206) mit einem Schmiermittelzufuhrkanal (11; 211),
    d) einem Raum (10; 210) im Gehäuse (4, 6; 204, 206), in den der Schmiermittelzufuhrkanal (11; 211) mündet und mit dem wenigstens eine der Drosseln (13; 113; 213) ständig in Verbindung steht,
    e) einem mittels einer Verstelleinrichtung (17, 18; 117; 218) bewegbaren Körper (13; 113'; 224), mittels dessen eine der beiden Drosseln (1, 2, 13; 101, 113; 201, 202, 213) unwirksam machbar ist,
    dadurch gekennzeichnet, daß
    f) die die größere Öffnungsweite aufweisende erste Drossel (1, 2,; 101; 201, 202) derart gehäusefest angeordnet ist, daß sie den Raum (10; 210) mit dem Zwei-Wege-Stromregler verbindet,
    g) die die kleinere Öffnungsweite aufweisende zweite Drossel (13: 113; 213) diejenige ist, deren Einlaßöffnung ständig mit dem Raum (10; 210) verbunden ist,
    h) durch eine Bewegung des Körpers (13; 113'; 224) gegen die Einlaßöffnung der ersten Drossel (1, 2; 101; 201, 202) hin letztere wenigstens unvollständig verschließbar ist.

2.  Gerät nach Anspruch 1, dadurch gekennzeichnet, daß der Körper (13) durch die zweite Drossel (13) gebildet und mittels der Verstelleinrichtung (17, 18) zwischen einer unwirksamen Stellung, in welcher die Einlaßöffnung der ersten Drossel (1, 2) direkt mit dem Raum (10) in Verbindung steht, und einer wirksamen Stellung bewegbar ist, in welcher der Drosselkanal der zweiten Drossel (13) an die Einlaßöffnung der ersten Drossel (1, 2) anschließt.

3.  Gerät nach Anspruch 1, dadurch gekennzeichnet, daß der Körper (113') ein düsennadelartiger Drosselkörper (113') der zweiten Drossel (113) ist, der zwischen einer wirksamen Stellung, in welcher er unter Bildung eines Spaltes (113'') in die Einlaßöffnung der ersten Drossel (101) eingreift und die die kleinere Öffnungsweite bildende Zweite Drossel (113) bildet, und einer unwirksamen Stellung bewegbar ist, in der er sich in einem die Einlaßöffnung der ersten Drossel (101) freigebenden Abstand von dieser befindet.

4.  Gerät nach Anspruch 1, gekennzeichnet durch einen beiden Drosseln gemeinsamen Drosselkörper (201), der zusätzlich zu einem die größere Öffnungsweite aufweisenden ersten Drosselkanal (202) mit einem die kleinere Öffnungsweite aufweisenden zweiten Drosselkanal (213) versehen ist, und daß der mittels der Verstelleinrichtung (217, 218) bewegbare Körper als Schließkörper (224) ausgebildet ist, der in seiner wirksamen Stellung die Einlaßöffnung des ersten Drosselkanals (202) verschließt und in seiner unwirksamen Stellung freigibt.

5.  Gerät nach einem der Ansprüche 1 bis 4, dadurch gekennzeichnet, daß die Verstelleinrichtung (17, 18; 217, 218) einen Elektromagneten oder einen Arbeitszylinder als Antriebselement aufweist.

6.  Gerät nach Anspruch 5, dadurch gekennzeichnet, daß die Verstelleinrichtung (17, 18; 217, 218) zusätzlich zu ihrem nur in der einen Richtung eine Betätigungskraft erzeugenden Antriebselement wenigstens eine Feder (18; 218) mit einer der Betätigungskraft des Antriebselementes entgegengesetzt gerichteten Kraft aufweist.

7.  Gerät nach einem der Ansprüche 1 bis 6, dadurch gekennzeichnet, daß der mittels der Verstelleinrichtung (17, 18; 217, 218) bewegbare Körper (12, 13; 113'; 224) gleichachsig zur ersten Drossel (1, 2; 101; 201, 202) und in Richtung von deren Längsachse verschiebbar in dem Raum (10; 210) angeordnet ist.

8. Gerät nach einem der Ansprüche 1 bis 7, dadurch gekennzeichnet, daß zumindest die eine Drossel (1, 2, 13; 101, 113; 201, 202, 213) auswechselbar in ihren Träger (3, 12; 203) eingesetzt ist.

9. Gerät nach einem der Ansprüche 1 bis 8, dadurch gekennzeichnet, daß zumindest die eine Drossel (1, 2, 13; 101; 201, 202, 213) mit einem Außengewinde zur Aufnahme in einer Gewindebohrung versehen ist.

10. Gerät nach Anspruch 2 oder einem der Ansprüche 5 bis 9 in Verbindung mit Anspruch 2, dadurch gekennzeichnet, daß der Körper (13; 113) der zweiten Drossel (13) in einen kolbenartigen längsverschiebbaren Träger (12) eingesetzt ist, welcher, wenn die zweite Drossel (13) die Form einer Buchse hat, mit einem Kanal (20, 21) versehen ist, der die Eintrittsöffnung der ersten Drossel (13) mit dem Raum (10) verbindet, und an dem die Verstelleinrichtung (17, 18) angreift.

11. Gerät nach Anspruch 10, dadurch gekennzeichnet, daß der Kanal (20, 21) in der Außenmantelfläche des kolbenartigen Trägers (12) mündet und zwischen der Außenmantelfläche des Trägers (12) und der Innenmantelfläche des Raumes (10) ein für den Durchfluß des Schmiermittels ausreichender Zwischenraum (16) vorhanden ist.

12. Gerät nach Anspruch 10 oder 11, dadurch gekennzeichnet, daß die erste Drossel (1; 101) und ein den Raum (10) mit dem Versorgungsanschluß verbindender Kanal (11) im Bereich des einen Endes dieses Raumes (10) vorgesehen sind und der kolbenartige Träger (12) vom anderen Ende her in den Raum (10) eingreift.

**Claims**

1. Device for dosing a lubricant independently of the supply pressure and viscosity, with
   a) a two-way flow regulator,
   b) at least two restrictors (1, 2; 101; 201, 202) having different opening widths, associated with the two-way flow regulator, for controlling the quantity of lubricant supplied to the points of lubrication,
   c) a housing (4, 6; 204, 206) containing the restrictors (1, 2, 13; 101, 113; 201, 202, 203) with a lubricant supply channel (11; 211),
   d) a chamber (10; 210) in the housing (4, 6; 204, 206) into which the lubricant supply channel (11; 211) opens and to which at least one of the restrictors (13; 113; 213) is permanently connected,
   e) a member (13; 113'; 224) able to move by means of an adjusting device (17, 18; 117; 218), by means of which member one of the two restrictors (1, 2, 13; 101, 113; 201, 202, 213) can be made inoperative, characterised in that
   f) the first restrictor (1, 2; 101; 201, 202) having the larger opening width is integral with the housing so that it connects the chamber (10; 210) to the two-way flow regulator,
   g) the second restrictor (13; 113; 213) having the smaller opening width is the one whereof the inlet opening is permanently connected to the chamber (10; 210),
   h) due to a movement of the member (13; 113; 224) towards the inlet opening of the first restrictor (1, 2; 101; 201, 202), the latter may be closed at least incompletely.

2. Device according to Claim 1, characterised in that the member (13) is formed by the second restrictor (13) and can be moved by means of the adjusting device (17, 18) between an inoperative position, in which the inlet opening of the first restrictor (1, 2) is connected directly to the chamber (10), and an operative position, in which the restrictor channel of the second restrictor (13) is connected to the inlet opening of the first restrictor (1, 2).

3. Device according to Claim 1, characterised in that the member (113') is a restrictor member (113') in the form of a jet needle of the second restrictor (113), which is able to move between an operative position, in which it engages in the inlet opening of the first restrictor (101), with the formation of a gap (113'') and forms the second restrictor (113) forming the smaller opening width, and an inoperative position, in which it is located at a distance from the first restrictor (101), opening the inlet opening thereof.

4. Device according to Claim 1, characterised by a restrictor member (201) common to both restrictors, which member in addition to a first restrictor channel (202) having the greater opening width, is provided with a second restrictor channel (213) having the smaller opening width, and that the member able to be moved by means of the adjusting device (217, 218) is constructed as a closing member (224), which in its operative position closes off the inlet opening of the first restrictor channel (202) and opens it in its inoperative position.

5. Device according to one of Claims 1 to 4, characterised in that the adjusting device (17, 18; 217, 218) comprises a solenoid or an operating cylinder as the driving member.

6. Device according to Claim 5, characterised in that in addition to its drive member producing an actuating force solely in one direction, the adjusting device (17, 18; 217, 218) comprises at least one spring (18; 218) with a force directed in opposition to the actuating force of the drive member.

7. Device according to one of Claims 1 to 6, characterised in that the member (12, 13; 113'; 224) able to move by means of the adjusting device (17, 18; 217, 218) is coaxial with respect to the first restrictor (1, 2; 101; 201, 202) and is arranged to slide in the chamber (10; 210) in the direction of its longitudinal axis.

8. Device according to one of Claims 1 to 7, characterised in that at least one restrictor (1, 2, 13; 101, 113; 201, 202, 213) is exchangeably inserted in its support (3, 12; 203).

9. Device according to one of Claims 1 to 8, characterised in that at least one restrictor (1, 2, 13; 101; 201, 202, 213) is provided with an external thread to be received in a threaded bore.

10. Device according to Claim 2 or one of Claims 5 to 9 in conjunction with Claim 2, characterised in that the member (13; 113) of the second restrictor (13) is inserted in a piston-like, longitudinally displaceable support (12), which, if the second restrictor (13) is in the shape of a bush, is provided with a channel (20, 21), which connects the inlet opening of the first restrictor (13) to the chamber (10) and on which the adjusting device (17, 18) acts.

11. Device according to Claim 10, characterised in that the channel (20, 21) opens into the outer surface of the piston-like support (12) and provided between the outer surface of the support (12) and the inner surface of the chamber (10) is an intermediate space (16) sufficient for the throughflow of the lubricant.

12. Device according to Claim 10 or 11, characterised in that the first restrictor (1; 101) and a channel (11) connecting the chamber (10) to the supply connection are provided in the region of one end of this chamber (10) and the piston-like support (12) engages in the chamber (10) from the other end.

**Revendications**

1. Appareil pour doser les lubrifiants indépendamment de la viscosité et de la pression d'alimentation qui comprend :
   a) un régulateur de débit à deux voies;
   b) au moins, deux étranglements (1,2,; 101; 201, 202) associés au régulateur (1,2 ; 101; 201, 202) ayant des sections libres différentes pour régler la quantité de lubrifiant arrivant aux points de lubrification;
   c) une enveloppe (4,6; 204, 206) contenant les étranglements (1, 2, 13; 101, 113; 201, 202, 213) comportant un canal d'alimentation de lubrifiant (11; 211);
   d) une chambre (10, 210) dans l'enveloppe (4,6; 204, 206) dans laquelle le canal d'alimentation de lubrifiant (11; 211) débouche et auquel communique en permanence, au moins, l'un des étranglements (13; 113; 213);
   e) un élément (13; 113'; 224) déplaçable au moyen d'un dispositif de réglage (17, 18; 117; 218) au moyen duquel l'un des deux étranglements (1, 2, 13; 101, 113; 201, 202, 213) peut être rendu inopérant,
   caractérisé en ce que :
   f) le premier étranglement, qui présente la plus grande section libre ou ouverte (1, 2; 101; 201, 202), est fixé de telle manière dans l'enveloppe, qu'il relie la chambre (10; 210) ou le régulateur de débit à deux voies;
   g) le second étranglement (13; 113) qui présente une plus petite section libre (13; 113) est celui dont l'ouverture d'entrée communique en permanence avec la chambre (10; 210);
   h) par un mouvement du corps (13; 113; 224), en direction de l'orifice d'entrée du premier étranglement (1, 2; 101; 201, 202), ce dernier peut être fermé, au moins, partiellement.

2. Appareil selon la revendication 1, caractérisé en ce que le corps (113') du second étranglement (113) peut se déplacer entre une première position active, dans laquelle il s'engage dans le premier étranglement (101) en ménageant une fente (113") et qui forme le second étranglement ayant une section libre plus petite (113), et une position inactive dans laquelle il se situe à une distance de l'orifice d'entrée du premier étranglement (101) suffisante pour découvrir celui-ci.

3. Appareil selon la revendication 1, caractérisé en ce que le corps (113') est un élément en forme de douille (113') du second étranglement (113) qui peut se déplacer entre une premier position active dans laquelle il s'engage dans l'orifice d'entrée du premier étranglement (101) en formant une fente (113''), et qui constitue le second étranglement présentant une plus petite section libre (113), et une position inactive dans laquelle il est à une distance du premier étranglement (101) découvrant l'orifice d'entrée de celui-ci.

4. Appareil selon la revendication 1, caractérisé par un corps (201) commun aux deux étranglements, qui comporte, en plus, un canal d'étranglement (202) présentant la plus grande section libre, et un canal (213) ayant la plus petite section libre, et en ce que, l'élément déplaçable au moyen du dispositif de réglage (217, 218) constitue un élément de fermeture (224) qui, en position active, ferme le premier canal d'étranglement (202) et, en position inactive découvre celui-ci.

5. Appareil selon l'une quelconque des revendications 1 à 4, caractérisé en ce que le dispositif de réglage (17, 18; 217, 218) comporte, en tant que moyen d'actionnement un électroaimant ou un cylindre de travail.

6. Appareil selon la revendication 5, caractérisé en ce que le dispositif de réglage (17, 18; 217, 218) comporte, en plus de l'élément d'actionnement qui ne produit une force d'actionnement que dans une certaine direction, au moins, un ressort (18; 218) dont la force est orientée à l'opposé de celle de l'élément d'actionnement.

7. Appareil selon l'une quelconque des revendications 1 à 6, caractérisé en ce que l'élément (12, 13; 113'; 224) déplaçable au moyen du dispositif de réglage (17, 18; 217, 218) est monté dans la chambre (10; 210) de façon à être déplaçable coaxialement au premier étranglement (1, 2; 101,102) et dans la direction de leur axe longitudinal dans la chambre (10; 210).

8. Appareil selon l'une quelconque des revendications 1 à 7, caractérisé en ce que, au moins, un étranglement (1, 2, 13; 101, 113; 202, 213 ) est monté de façon interchangeable sur son support (3, 12; 203).

9. Appareil selon l'une quelconque des revendications 1 à 8, caractérisé en ce que, l'un, au moins, des étranglements (1, 2, 13; 101; 201, 202, 213) est fileté extérieurement afin de pouvoir être vissé dans un trou fileté.

10. Appareil selon la revendication 2, ou selon l'une des revendications 5 à 9, en relation avec la revendication 2, caractérisé en ce que le corps (13; 113) du second étranglement (13) est monté sur un support en forme de piston (12) déplaçable longitudinalement qui, quand le second étranglement (13) présente la forme d'une douille, est pourvu d'un canal (20, 21) qui relie l'orifice d'entrée du premier étranglement (13) avec la chambre (10), et coopère avec le dispositif de réglage (17, 18).

11. Appareil selon la revendication 10, caractérisé en ce que le canal (20, 21) débouche à la surface extérieure de l'enveloppe du support en forme de piston (12), et en ce que, entre la surface extérieure de l'enveloppe du support (12) et la surface intérieure de la chambre (10), subsiste un intervalle (12) suffisant pour permettre au lubrifiant de circuler.

12. Appareil selon la revendication 10 ou 11, caractérisé en ce que le premier étranglement (1; 101) et un canal reliant la chambre (10) avec le raccord d'alimentation (11) sont prévus dans la région de l'une des extrémités de cette chambre (10) et en ce que le support en forme de piston (12) s'engage dans cette chambre (10) par son autre extrémité.

Fig.1

Fig.2

Fig.3

Fig.4